Europäisches Patentamt

(19) European Patent Office

Office européen des brevets

(11) Numéro de publication: **0 214 213**
**B1**

(12) **FASCICULE DE BREVET EUROPEEN**

(45) Date de publication du fascicule du brevet:
**17.11.88**

(51) Int. Cl.⁴: **G 01 L 1/24**

(21) Numéro de dépôt: **86901426.6**

(22) Date de dépôt: **05.03.86**

(86) Numéro de dépôt international:
**PCT/FR 86/00071**

(87) Numéro de publication internationale:
**WO 86/05273 (12.09.86** Gazette 86/20**)**

(54) **DISPOSITIF OPTIQUE DE DETECTION D'EFFORT, PROCEDE DE MESURE D'EFFORT AU MOYEN DUDIT DISPOSITIF ET LEUR APPLICATION A UNE BALANCE.**

(30) Priorité: **07.03.85 FR 8503356**

(43) Date de publication de la demande:
**18.03.87 Bulletin 87/12**

(45) Mention de la délivrance du brevet:
**17.11.88 Bulletin 88/46**

(84) Etats contractants désignés:
**AT BE CH DE FR GB IT LI LU NL SE**

(56) Documents cités:
**Patents Abstracts of Japan, volume 1, No. 142 (P-205) (1282), 22 June 1983**

(73) Titulaire: **Bocquet, Jean-Claude, 6 Rue des Bleuets, F-94360 l'Hay les Roses (FR)**
Titulaire: **NOEL, Jacques, 3 Parc de la Bérangère, F-92210 Saint Cloud (FR)**

(72) Inventeur: **Bocquet, Jean-Claude, 6 Rue des Bleuets, F-94360 l'Hay les Roses (FR)**
Inventeur: **NOEL, Jacques, 3 Parc de la Bérangère, F-92210 Saint Cloud (FR)**

(74) Mandataire: **Martin, Jean-Jacques et al, Cabinet REGIMBEAU 26, Avenue Kléber, F-75116 Paris (FR)**

## Description

La présente invention est relative à un dispositif optique de détection d'effort, à un procédé de mesure d'effort au moyen de ce dispositif et à leur application à une balance. A l'heure actuelle, des dispositifs optiques de détection d'effort mettant en jeu la déformation d'un conducteur de lumière du type fibre optique permettent d'effectuer une mesure de contrainte appliquée sur une fibre par atténuation de l'intensité lumineuse transmise du fait de la modification des conditions de propagation de la lumière dans la fibre due à cette déformation. Des dispositifs du type jauge de contraintes utilisant la propriété précitée d'une fibre optique ont été décrits notamment dans le brevet américain US 4 163 397 ou dans la demande de brevet européen 0 082 820. Les dispositifs tels que décrits dans les documents précités nécessitent la mise en œuvre d'une structure mécanique additionnelle rapportée par exemple à la périphérie de la fibre afin de permettre l'application d'efforts et de déformations périodiques sur la longueur de la fibre, la mesure de l'effort total appliqué sur la fibre étant en relation directe de l'atténuation de l'intensité de la lumière transmise par la fibre soumise à déformation. Si ce type de dispositif permet effectivement une mesure de la contrainte ou effort exercé sur la fibre, il n'autorise cependant pas la mise en œuvre simple d'un dispositif capable d'effectuer une mesure de pesée dans les conditions opératoires habituelles requises de justesse, de fidélité et de précision requises pour ce type d'appareils de mesure, ni même d'un dispositif susceptible de permettre un relevé bidimensionnel des efforts ou contraintes exercées sur une surface, soit un relevé de carte de pression.

La présente invention a pour but la mise en œuvre d'un dispositif optique de détection d'effort susceptible de permettre la mesure d'un effort ou d'une masse dans les conditions habituelles requises pour la pesée.

Un autre objet de la présente invention est la mise en œuvre d'un dispositif optique permettant d'effectuer un relevé de carte de pression sur une aire ou surface d'essai déterminée.

Un autre objet de la présente invention est la mise en œuvre d'un procédé de mesure d'effort ou de relevé de carte de pression sur une aire ou surface d'essai déterminée au moyen du dispositif de l'invention.

Le dispositif optique de détection d'effort selon l'invention comporte au moins une fibre optique disposée de manière à former un réseau. Des moyens émetteurs de lumière disposés à une extrémité, dite d'entrée, de la ou des fibres et des moyens récepteurs de lumière disposés à l'autre extrémité, dite de sortie, de la ou des fibres permettent de délivrer une information relative à l'intensité lumineuse transmise par la ou les fibres du réseau et une mesure correspondante de l'effort.

Le procédé de relevé des efforts appliqués en une pluralité de points d'une aire d'essai au moyen du dispositif de l'invention consiste à disposer le réseau constitué d'une pluralité de fibres du dispositif de l'invention sur l'aire d'essai. Un état zéro du système pour chaque point i, j intersection des fibres est inscrit en mémoire en l'absence de contrainte d'essai appliquée sur l'aire d'essai et le réseau. La contrainte d'essai étant appliquée sur le réseau et l'aire d'essai, les valeurs d'effort relatif $F_i$, $R_j$ délivrées par le détecteur associé à chaque fibre optique d'ordre i, j dans une première et une deuxième direction sont mémorisées. L'effort relatif $P_{ij}$ appliqué en chaque point de coordonnées i, j intersection des fibres d'ordre i et d'ordre j de la première et de la deuxième direction du réseau est déterminé au moyen d'une combinaison linéaire du type

$$P_{ij} = \frac{\alpha_i R_j + \beta_j F_i}{2}$$

dans laquelle m, n étant le nombre de fibres

$$\alpha_i = \frac{F_i}{\sum\limits_{1}^{m} R_j} \quad \text{et} \quad \beta_j = \frac{R_j}{\sum\limits_{1}^{n} F_i}$$

L'invention trouve application dans les appareils de pesée, les appareils de mesure de contraintes appliquées sur des surfaces gauches, dans l'industrie de fabrication de corps creux, réservoirs, coques, pièces formées par emboutissage, essai de corps creux soumis sur leurs parois internes à des efforts périodiques ou sensiblement périodiques et notamment systèmes mécaniques utilisés en robotique ou même industrie de la chaussure spécialisée.

Application peut également être trouvée dans tout système dans lequel tout effort engendrant un déplacement d'un élément positionné selon un système de coordonnées dans un plan doit être détecté, cette détection donnant une mesure de ladite position.

L'invention sera mieux comprise à la lecture de la description et à l'observation des dessins ci-après dans lesquels:

les figures 1a et 1b représentent un dispositif selon l'invention respectivement selon un mode de réalisation simple et selon un mode de réalisation plus élaboré,

les figures 2a, 2b et 2c représentent un détail de réalisation des dispositifs objet de l'invention selon une coupe de la figure 1b,

les figures 3a et 3b représentent une vue détaillée en perspective d'un élément de la figure 1b,

la figure 4 représente un schéma détaillé de réalisation d'un élément de la figure 1a ou 1b,

la figure 5 représente un dispositif de l'invention plus particulièrement adapté à la pesée,

la figure 6a représente un dispositif de l'invention plus particulièrement adapté pour l'établissement d'un relevé ou carte de pressions exercées sur une aire ou surface d'essai,

la figure 6b représente un schéma détaillé illustratif d'un procédé de mesure de pression au moyen d'un dispositif de l'invention tel que représenté en figure 6a.

Dans l'ensemble des figures précitées, les cotes et dimensions relatives des différents éléments n'ont pas été respectées afin de ne pas nuire à la clarté de leur représentation.

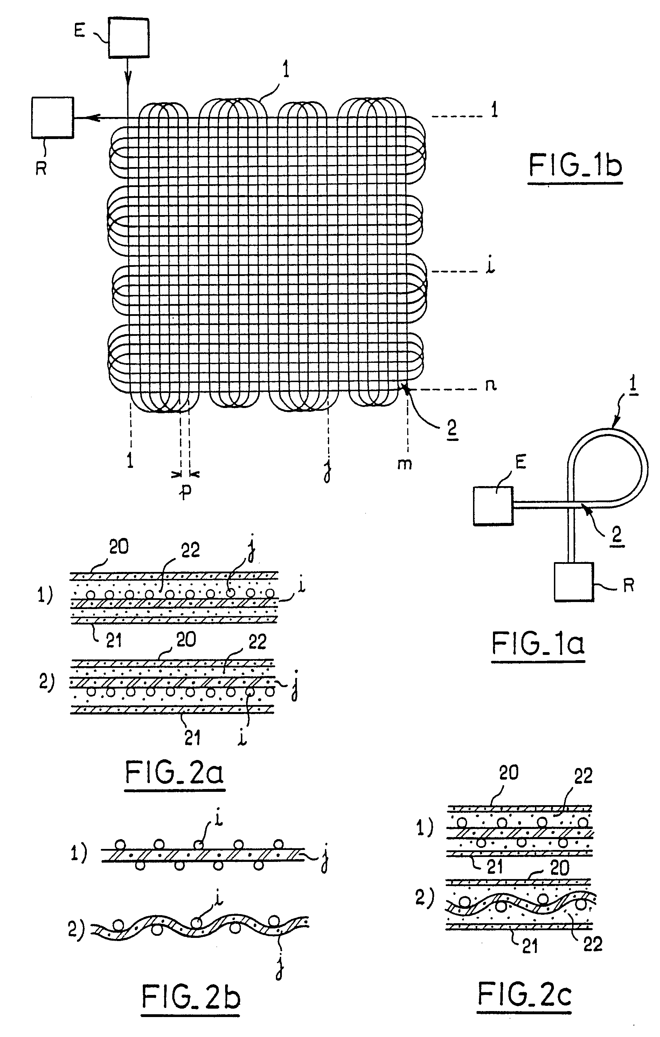

Une description du principe du dispositif optique de détection d'effort selon l'invention sera tout d'abord donnée à partir des figures 1a et 1b. Le dispositif de l'invention comprend au moins une fibre optique 1 disposée de manière à former un réseau 2. Des moyens émetteurs de lumière référencés E sont disposés à une extrémité de la ou des fibres optiques et des moyens récepteurs de lumière référencés R sont disposés à l'autre extrémité de la fibre dite extrémité de sortie de la ou des fibres. Les moyens récepteurs R sont aptes à délivrer une information relative à l'intensité lumineuse transmise par la ou les fibres du réseau et une mesure correspondante de l'effort appliqué.

Par réseau, il faut entendre par exemple une simple boucle constituée par un élément de fibre replié présentant un point d'intersection, formant contact, des éléments repliés ou toute combinaison d'une ou plusieurs fibres et de fils formant contact magnétique avec les fibres disposées de manière à former un arrangement constituant un réseau maillé régulier ou non ainsi que représenté en figure 1b. Sur la figure 1b, le réseau maillé 2 objet de l'invention, à été représenté dans un mode de réalisation particulier non limitatif, chaque maille du réseau étant délimitée par deux lignes de trames i et deux lignes de chaîne j successives respectivement, les lignes de chaîne et de trame étant constituées par la ou les fibres espacées selon un pas p déterminé. Le réseau 2 comprend m, n lignes.

Le pas d'espacement p des lignes de chaîne et/ou de trame est pris égal à x k λ/2 où λ représente la période spatiale critique de la perturbation mécanique susceptible de coupler les groupes de modes de propagation voisins dans la fibre considérée et k un entier > 1. Pour un même réseau, la valeur k peut être prise variable dans des limites de valeur déterminées. Pour une fibre donnée, la valeur du paramètre est donnée par la formule ou relation de Fields: $\lambda = 2\,\pi\,a/2\Delta)^{1/2}$, pour une fibre optique à gradient d'indice de réfraction, relation dans laquelle a est le rayon du noyau de la fibre, $2\Delta = (1 - n_0^2 / n_c^2)$, $n_0$ étant l'indice de réfraction de l'enveloppe de la fibre optique et $n_c$ l'indice de réfraction du noyau de fibre respectivement.

Selon le mode de réalisation représenté figure 1b, le réseau 2 de fibre est constitué à partir d'une seule fibre repliée en enroulements successifs décalés, un groupe d'enroulements étant formé selon un même sens de rotation, par exemple le sens de rotation trigonométrique, puis un deuxième groupe successif d'enroulements étant ensuite formé selon un même sens de rotation, opposé au premier et ainsi de suite. Le nombre de groupes ayant été choisi selon une première direction, la fibre est ensuite recourbée dans une deuxième direction par exemple perpendiculaire à la première afin de former un deuxième arrangement de groupes d'enroulements s'étendant selon cette deuxième direction. Les extrémités de la fibre constituée ainsi en réseau peuvent alors être reliées à l'émetteur E et au récepteur R de lumière.

Un signal lumineux étant émis par l'émetteur E la propagation de celui-ci dans la fibre constituée en réseau est modifiée par tout champ de contraintes appliquées sur le réseau, conformément à la théorie correspondante de l'interaction entre les déformations appliquées à la fibre et l'atténuation de l'intensité transmise du signal lumineux sous l'effet de ces déformations. Pour une étude théorique de ces interactions, on pourra se reporter à l'étude publiée par A. J/Barlow, J.J. Ramskov Hansen et D.N. Payne intitulée «Birefringence and polarisation mode-dispersion in spun single-mode fibres» (Appl. Opt., vol. 20, pages 2962-2968, septembre 1981).

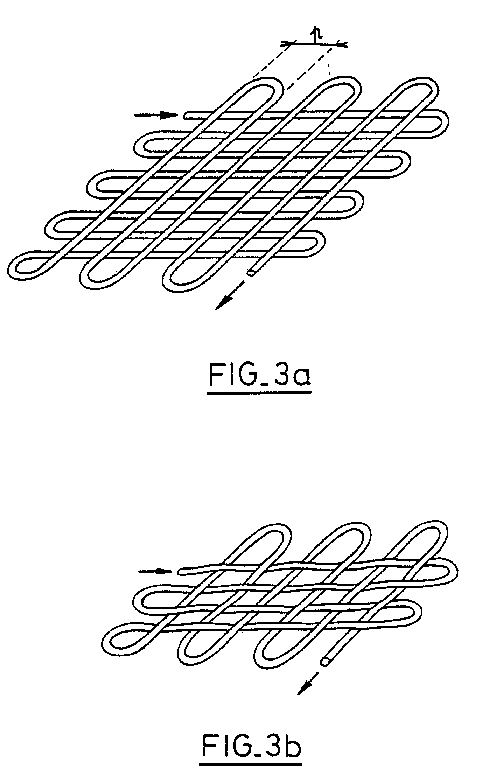

Différents modes de réalisation du réseau 2 seront maintenant décrits au moyen des figures 2a, 2b, 2c et 3a, 3b.

Ainsi que représenté en figure 2a.1, figure 2a.2 et figure 3a, la ou les fibres optiques sont disposées de manière à former un réseau constitué de lignes de trame et de lignes de chaîne, les lignes de trame i étant superposées aux lignes de chaîne j ou réciproquement. Sur les figures 2a.1 et 2a.2, les vues respectives sont représentées en coupe selon respectivement la ligne de trame d'ordre i et la ligne de chaîne dordre j. Afin d'assurer la tenue mécanique de l'ensemble du réseau 2, celui-ci peut être noyé dans une couche de matériau élastomère au silicone. Le matériau élastomère peut par exemple être constitué par un matériau disponible dans le commerce et connu sous la marque de fabrique «Rhodorsil» distribué par la société Rhone-Poulenc. Ce matériau permet en quelque sorte la réalisation d'un élément de réseau en forme de tapis sur les faces duquel des plaques supérieure 20 et inférieure 21 peuvent être disposées et assujetties par collage pour en assurer la protection. Les plaques supérieure 20 et inférieure 21 peuvent par exemple être constituées par un matériau néoprène, une fibre synthétique ou naturelle.

Selon un autre mode de réalisation, le matériau 22 enrobant le réseau 2 de fibres optiques peut être constitué par un matériau alvéolaire du type mousse de polyuréthane. Dans ce dernier cas, la densité du matériau alvéolaire et en conséquence son élasticité est choisie de manière à établir une plage de sensibilité du réseau muni de son enrobage de matériau alvéolaire, la densité de ce matériau et donc son élasticité déterminant en fait l'atténuation des efforts ou contraintes appliquées sur le réseau. Dans les deux cas précités, que le matériau d'enrobage soit du matériau de type massif, comme dans le cas de la mousse polyuréthane, l'enrobage du réseau peut être effectué par surmoulage.

Selon un mode de réalisation préférentiel, le réseau 2 peut être constitué par des fibres et/ou des fils tricotés ou tissés. Des exemples de réalisation de réseau tricoté ou tissé sont représentés en figures 2b.1, 2b.2, 2c.1, 2c.2 et en figure 3b. Ainsi que représenté en figure 2b.1 chaque ligne de trame i est superposée à chaque ligne de chaîne j et réciproquement à chaque maille ou pas du réseau. Cette superposition peut être effectuée soit selon une seule direction du réseau ainsi que représenté en figure 2b.1, 2c.1 ou bien suivant les deux directions du réseau, ainsi que représenté en figures 2b.2, 2c.2 et 3b des dessins. En outre, sur les figures 2c.1, 2c.2, un réseau muni de sa couche d'enrobage 22 et de ses plaques supérieure 20 et inférieure 21 a été représenté. Les fibres optiques de chaîne ou de trame peuvent être remplacées par un élément filiforme ayant pour seul rôle de permettre l'application de l'effort sur les lignes de trame ou de chaîne constituées, elles, par des fibres optiques, le réseau étant alors ainsi formé.

Les fibres optiques utilisées pour la réalisation des réseaux tels que décrits précédemment peuvent être soit des fibres monomodes ou multimodes à gradient d'indice ou à saut d'indice et par exemple des fibres plastiques de diamètre compris entre 25 dixièmes de millimètre et un millimètre, soit des fibres en quartz de silice de diamètre un dixième de millimètre. Lors de l'utilisation de fibres plastiques de 25 dixièmes de millimètre de diamètre pour constituer le réseau, il est possible d'obtenir une structure finale telle que représentée en figure 2a ou 2c dont l'épaisseur n'excède pas 7 à 8 millimètres.

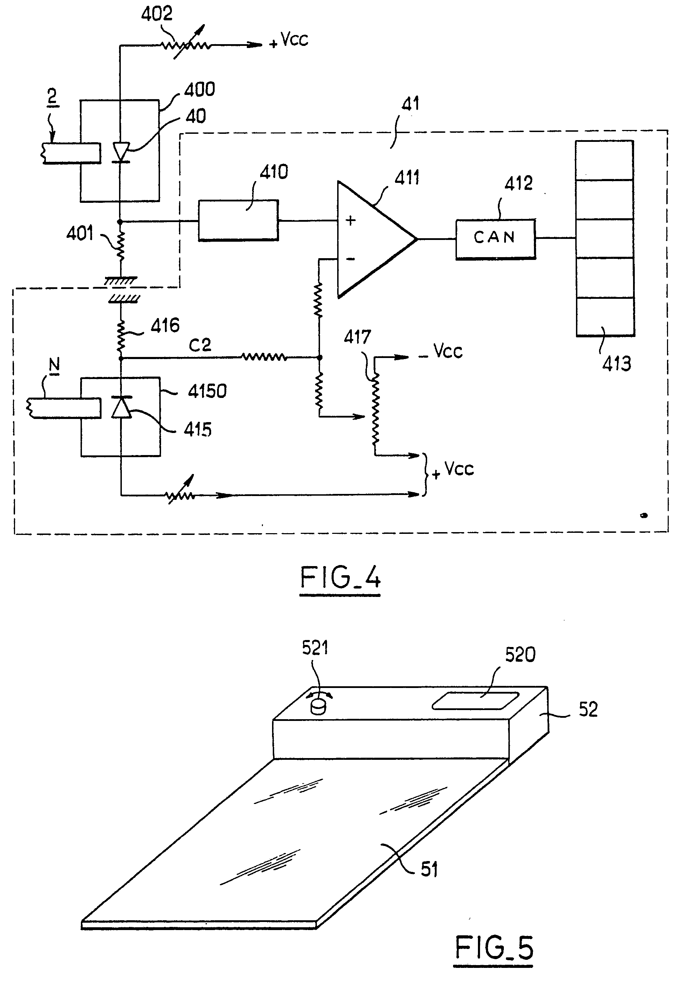

Un mode de réalisation des émetteurs E et récepteurts R sera maintenant donné avec la description de la figure 4. Les moyens émetteurs de lumière E peuvent être constitués par une ou plusieurs diodes électroluminescentes. Les moyens récepteurs de lumière sont eux-mêmes constitués par une ou des diodes photo-conductrices, photodiodes 40, munies d'un dispositif de détection 41. Il va de soi que la nature des diodes utilisées pour l'émission de la lumière détermine en fonction des caractéristiques optiques de la ou des fibres utilisées, les paramètres géométriques du réseau. Ainsi, pour une ou des diodes électroluminescentes émettant dans le domaine du proche infra-rouge la période critique $\lambda$ est de 9,81 millimètres pour une fibre plastique de diamètre 1 millimètre.

Ainsi que représenté sur la figure 4, la ou les diodes électroluminescentes et la ou les photodiodes 40 sont enfermées dans un boîtier 400, étanche à la lumière, dans lequel l'extrémité de la fibre, extrémité de sortie du réseau 2, est encastrée de manière à assurer une illumination convenable de la photodiode 40.

Le dispositif de détection 41 comporte connecté en cascade un filtre passe-bas et un convertisseur analogique-numérique 412 ainsi qu'un afficheur 413. Le filtre passe-bas 410 est connecté sur la résistance de charge 401 de la diode 40, laquelle, est en outre alimentée par une tension de polarisation +Vcc par l'intermédiaire d'une résistance ajustable 402. L'afficheur 413 peut par exemple être constitué par un afficheur sept segments ou par un système d'affichage à cristaux liquides.

Afin d'assurer une très bonne précision de mesure, le dispositif de détection 41 comporte en outre un dispositif de tarage ou de réglage du zéro. Celui-ci comprend un amplificateur différentiel 411 inséré entre le filtre passe-bas 410 et le convertisseur analogique numérique 412 et dont l'entrée positive est connectée à la sortie du filtre passebas 410. L'entrée négative de l'amplificateur différentiel est reliée à un potentiomètre 417 de réglage du zéro, lui-même connecté à deux tensions de signe opposé +Vcc, –VCC. En outre, une fibre neutre est prévue, référencée N sur la figure 4, pour assurer un étalonnage ou calage du zéro de l'appareil en fonction de l'état optique du système. Par fibre neutre, on entend une fibre de même nature et issue du même lot de fabrication que la fibre ou les fibres utilisées pour la réalisation du réseau mais non soumise aux efforts de contraintes. La fibre neutre N reçoit en illumination d'entrée une fraction de l'illumination engendrée par la ou les diodes électro-luminescentes du réseau au moyen par exemple d'un système optique simple non représenté aux dessins afin de ne pas surcharger ceux-ci. La fibre neutre N délivre à partir d'un récepteur de lumière propre 415, également enfermé dans un boîtier étanche 4150, un signal de calage du zéro Cz à l'entrée négative de l'amplificateur différentiel. Le système de fibre neutre permet notamment de se prémunir soit du vieillissement inévitable des composants constituant les fibres optiques, soit d'autoriser une alimentation de l'ensemble des circuits électroniques à partir d'une source de tension continue autonome malgré les baisses de niveau de tension de ces derniers inhérentes à leurs vieillissement avec un degré de précision de mesure suffisant dans le temps.

Un exemple d'application du dispositif de l'invention sera maintenant décrit dans le cadre d'un dispositif de pesée tel que représenté en figure 5. Le dispositif représenté à cette figure est particulièrement bien adapté comme dispositif pèse-personne. Il comporte en particulier un réseau constitué en tapis 51 ainsi que précédemment décrit et un boîtier 52 comprenant un émetteur et un récepteur de lumière et le circuit de détection associé ainsi que précédemment décrit. L'afficheur 413 de la figure 4 apparaît sur la face supérieure du boîtier 52 au niveau d'une fenêtre 520. Un bouton de réglage du zéro 521 apparaissant également sur la face supérieure du boîtier, permet à l'utilisateur le réglage du zéro par la commande du potentiomètre 417. Le type d'appareil décrit en figure 5 apparaît particulièrement bien adapté à une utilisation domestique, le tapis 51 formant réseau dont l'épaisseur hors-tout ne dépasse pas 7 millimètres, pouvant être par exemple inséré sous le tapis ou la moquette d'une pièce d'habitation.

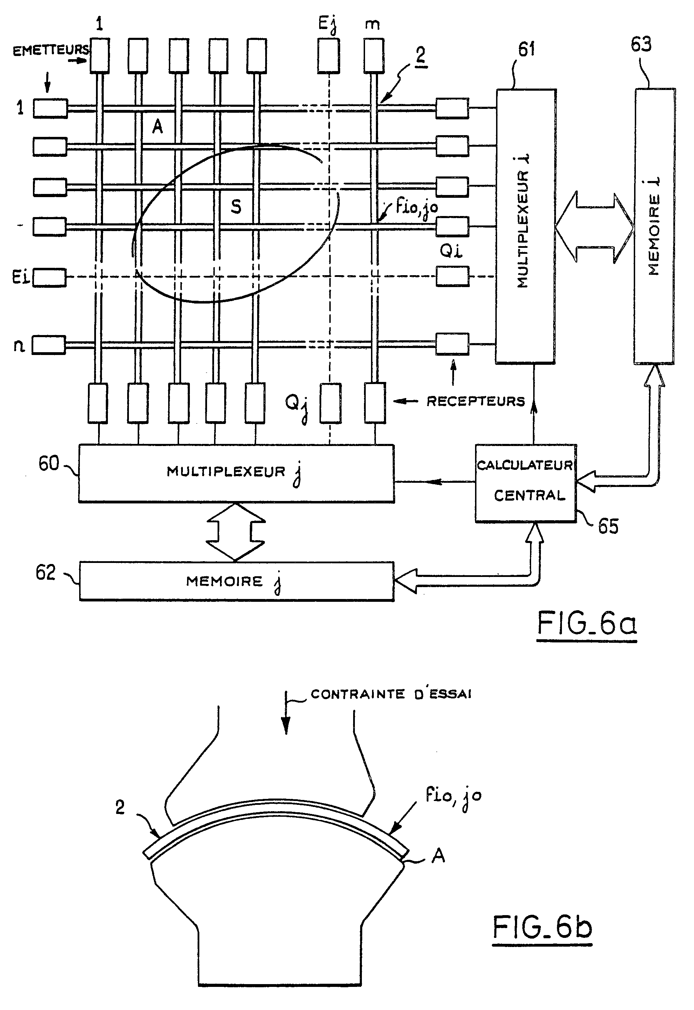

Un autre dispositif conformément à l'invention spécialement adapté pour permettre un relevé des efforts relatifs ou carte de pression appliqués en une pluralité de points d'une aire d'essai sera maintenant décrit en relation avec la figure 6a. Selon cette figure, le dispositif comporte un réseau 2 constitué d'une pluralité de m lignes de chaîne dans une première direction et de n lignes de trame dans une deuxième direction. Pour commodité sur la figure 6a, la première et la deuxième directions ont été représentées perpendiculaires. Chaque ligne de chaîne ou ligne de trame est constituée par une fibre optique indépendante munie de ses moyens émetteurs de lumière référencés $E_i$, $E_j$ et de ses moyens récepteurs et détecteurs référencés $Q_i$, $Q_j$. Des moyens de mémorisation dynamique 62, 63 permettent une mise en mémoire des valeurs d'efforts relatifs Fi, Rj délivrées par le détecteur associé à chaque fibre optique d'ordre i, j dans la première respectivement deuxième direction. En outre, des moyens de lecture/écriture, des moyens de mémorisation 62, 63 précités et des moyens de calcul 65 permettent de calculer l'effort relatif appliqué en chaque point du réseau de coordonnées i, j de la première respectivement deuxième direction du réseau, selon une combinaison linéaire des mesures délivrées par les récepteurs Qi, Qj de la forme

$$P_{ij} = \frac{\alpha_i R_j + \beta_j F_i}{2}$$

$$\text{où:} \quad \alpha_i = \frac{F_i}{\sum\limits_1^m R_j} \quad \text{et ou} \quad \beta_j = \frac{R_j}{\sum\limits_1^n F_i}$$

m et n étant le nombre de lignes de chaîne et de lignes de trame respectivement.

Sur la figure 6a, les moyens de lecture/écriture des moyens de mémorisation 62, 63 et les moyens de calcul de l'effort relatif appliqué sur le réseau peuvent par exemple être constitués par un calculateur central 65. De plus, afin d'assurer la liaison des récepteurs Qi, Qj aux mémoires correspondantes 63, 62, des systèmes multiplexeurs i notés 61 et multiplexeurs j notés 60 sont également prévus. Ces multiplexeurs pilotés par le calculateur central 65 permettent la connexion séquentielle de tous les récepteurs Qi, Qj et l'inscription dans les mémoires correspondantes, mémoires i, 63, mémoires j, 62 à des adresses déterminées des valeurs d'atténuation ou en conséquence d'effort données par les détecteurs précités. Le calculateur central 65 peut être muni d'un clavier du type clavier d'ordinateur, d'un moniteur de télévision permettant d'afficher au gré de l'opérateur les résultats de mesure, de mémoires auxiliaires permettant d'emmagasiner en mémoire centrale du calculateur tout programme de traitement des données mesurées par les récepteurs Qi, Qj. Les récepteurs précités peuvent se réduire pour chacun à une photodiode, un filtre passe-bas et un convertisseur analogique-numérique tels que précédemment décrits dans le cadre de la figure 4. Les multiplexeurs 60 et 61 peuvent être des multiplexeurs ou circuits d'aiguillage numériques normalement disponibles dans le commerce. Les mémoires 62, 63 peuvent normalement être des mémoires de type mémoires RAM, mémoires adressables, pouvant être lues, inscrites, effacées à volonté. Elles peuvent être ou non intégrées au calculateur central 65.

Un procédé de relevé des efforts appliqués en une pluralité de points d'une aire d'essai au moyen d'un dispositif tel que décrit notamment en figure 6a, sera décrit en liaison avec cette figure ainsi qu'avec la figure 6b. Le procédé consiste à disposer le réseau 2 du dispositif de l'invention sur l'aire d'essai. En l'absence de contrainte d'essai appliquée sur l'aire d'essai et donc sur le réseau 2, un état zéro du système est inscrit en mémoire pour chaque point de coordonnées i, j intersection des fibres optiques du réseau d'ordre correspondant. On comprend en effet que le réseau 2 du dispositif tel que décrit est particulièrement adapté pour une application de mesure de contrainte sur une surface gauche en raison d'une part des faibles dimensions d'épaisseur du réseau, celui-ci pour l'application considérée pouvant naturellement être constitué au moyen de fibres optiques en quartz de silice de diamètre de l'ordre d'un

dixième de millimètre, l'épaisseur totale après enrobage du réseau de fibres étant inférieur à deux millimètres. Sur la figure 6a, les émetteurs Ei, Ej et les récepteurs Qi, Qj ont été représentés à proximité immédiate du réseau 2 pour des raisons pratiques de réalisation du dessin. Il est bien évident que les émetteurs et récepteurs peuvent au contraire être disposés loin de ce réseau afin de laisser à celui-ci toute propriété de maniabilité et de facilité de manipulation pour les applications sur les surfaces gauches les plus diverses. En particulier, le réseau 2 apparaît ainsi comme une peau sensible capable de détecter toute information de pression ou de contrainte et sa localisation.

La contrainte d'essai est ensuite appliquée sur l'aire et le réseau 2 et les valeurs d'effort relatif Fi, Rj délivrées par chaque détecteur ou récepteur dans la première respectivement deuxième direction sont mémorisées. L'effort relatif Pij appliqué en chaque point de cordonnées i, j intersection des fibres d'ordre i et d'ordre j de la première respectivement deuxième direction du réseau est ensuite déterminé par calcul selon la relation

$$P_{ij} = \frac{\alpha_i R_j + \beta_j F_i}{2}$$

$$\text{dans laquelle} \quad \alpha_i = \frac{F_i}{\sum\limits_1^m R_j} \quad \text{et} \quad \beta_j = \frac{R_j}{\sum\limits_1^n F_i}$$

Le calcul de l'effort relatif Pij ne faisant intervenir que des opérations arithmétiques classiques est avantageusement réalisé au moyen d'un programme emmagasiné dans le calculateur central. En outre, bien que non nécessairement, mais de manière avantageuse, les valeurs d'effort relatif Fi, Rj peuvent être normées par rapport à la plus grande valeur d'effort relatif délivrée par les détecteurs préalablement à la phase consistant à déterminer l'effort relatif Pij. Par valeur d'effort normée, on entend valeur d'effort exprimée en grandeur réduite par rapport à la plus grande des valeurs d'effort laquelle en conséquence est prise de manière arbitraire égale à l, les autres valeurs étant exprimées par rapport à celle-ci.

Le procédé tel que précédemment décrit sera maintenant explicité dans le cas de la détermination de l'effort absolu ei, j appliqué en chaque point de coordonnées i, j, intersection des fibres optiques d'ordre i, j du réseau au moyen des figures 6a et 6b. Dans ce but, le procédé consiste à disposer le réseau 2 de l'appareil sur une aire d'appui A supérieure à l'aire d'essai S sur laquelle, les contraintes sont appliquées. Sur les figures 6a et 6b, les aires d'appui et d'essai ont été représentées, l'aire d'essai S étant représentée au niveau de l'emboîtement de deux surfaces complémentaires d'un outil par exemple. L'aire d'essai S est ainsi définie pour tout point du réseau 2 de cordonnées u, v telles que $1 < u < n$; $1 < v < m$. En l'absence de contrainte d'essai sur le réseau 2, un état zéro définissant l'état initial du système est inscrit dans les mémoires i, j, 62, 63 précitées. La contrainte d'essai étant appliquée sur le réseau, au niveau de la seule aire d'essai S, les valeurs d'effort relatif Fi, Rj délivrées par chaque détecteur associé à chaque fibre optique d'ordre i, j sont alors mémorisées dans les mémoires i, j, 62, 63 relativement aux première et deuxième directions du réseau. La contrainte d'essai étant maintenue, un effort étalon $fi_0$, $j_0$ de valeur déterminée connue est appliqué en un point ou au moins un point de cordonnées $i_0$, $j_0$ du réseau telles que $i_0 \notin u$ et $j_0 \varepsilon v$ ou réciproquement $i_0 \varepsilon u$ et $j_0 \notin v$, c'est-à-dire en un point du réseau 2 extérieur à l'aire d'essai S. Les nouvelles valeurs d'effort relatif $Fi_0$, $Rj_0$ délivrées par le détecteur associé à chaque fibre optique d'ordre $i_0$, respectivement $j_0$, dans la première respectivement deuxième direction sont alors mises en mémoire à des adresses différentes des adresses précédentes utilisées pour mémoriser les valeurs d'effort en l'absence de contrainte étalon. Les différentes valeurs d'effort absolu ei, j de l'ensemble du réseau et de l'aire d'essai S sont ensuite obtenues à partir des nouvelles valeurs d'effort relatif $Fi_0$, $Rj_0$ en présence de la contrainte étalon, de la valeur de l'effort étalon $fi_0$, $j_0$ et des valeurs précédemment mémorisées d'effort relatif Fi, Rj par combinaison linéaire de ces valeurs.

Il est évident que la contrainte d'effort étalon doit être appliquée en un point dont les coordonnées correspondent à l'ordre d'une des fibres soumise à la contrainte d'essai c'est-à-dire traversant l'aire d'essai ainsi que représenté sur la figure 6a. Cependant, afin d'obtenir une simplification des calculs et donc des programmes permettant leur mise en œuvre, il peut paraître avantageux d'exercer la contrainte étalon en un point correspondant à la fibre sur laquelle la valeur d'effort mesurée par le détecteur est maximum. La détermination de l'ordre, c'est-à-dire du numéro d'ordre de la fibre correspondante peut être effectuée par un programme capable de choisir la plus grande des valeurs d'effort Fi ou Rj mémorisée dans les mémoires 62, 63. Ces programmes classiques dans le traitement des données, ne seront pas décrits car ils ne font appel qu'à des connaissances normales de l'homme du métier en matière de traitement de données. On a ainsi décrit une variante de réalisation d'un dispositif et d'un procédé de l'invention permettant l'ensemble des applications précédemment indiquées dans la présente description. En ce qui concerne l'application d'un dispositif tel que représenté en figure 6a, pour la localisation du mouvement d'un élément positionné en XY dans un plan de référence, le dispositif précité peut être utilisé par exemple comme élément sensible d'un clavier du type clavier d'ordinateur sur lequel la position correspondante des touches permet l'adressage correspondant en XY de celles-ci et en conséquence un codage de symboles ou caractères alphanumériques selon les codes actuellement utilisés dans le domaine de la transmission ou du traitement de l'information.

Le dispositif et le procédé objet de l'invention ne sont pas limités au seul mode de réalisation décrit, en particulier des dispositifs correspondants utilisant une peau sensible telle que précédemment décrite peuvent avantageusement être utilisés dans le domaine de la robotique pour la réalisation d'organes de préhension notamment.

## Revendications

1. Dispositif optique de détection d'effort, caractérisé en ce qu'il comporte:
— au moins une fibre optique (1) disposée de manière à former un réseau (2),
— des moyens émetteurs de lumière (E) disposés à une extrémité, dite extrémité d'entrée, de la ou des fibres et des moyens récepteurs de lumière (R) disposés à l'autre extrémité, dite extrémité de sortie, de la ou des fibres, lesdits moyens récepteurs (R) étant aptes à délivrer une information relative à l'intensité lumineuse transmise par la ou les fibres du réseau et une mesure correspondante de l'effort.

2. Dispositif selon la revendication 1, caractérisé en ce que la ou lesdites fibres sont disposées de manière à former un réseau maillé régulier, chaque maille du réseau étant délimitée par deux lignes de trame (i) et deux lignes de chaîne (j) successives respectivement constituées par la ou les fibres espacées selon un pas déterminé.

3. Dispositif selon l'une des revendications 1 ou 2, caractérisé en ce que le pas d'espacement des lignes de chaîne et de trame est égal à $k \times \dfrac{\lambda}{2}$ où k est un entier $\geq 1$ et où $\lambda$ représente la période critique de la perturbation mécanique susceptible de coupler les groupes de modes de propagation voisins, $\lambda = 2\pi a/(2\Delta)^{1/2}$, dans laquelle:
a est le rayon du noyau de la fibre,
$2\Delta = (1 - n_0^2/n_c^2)$, $n_0$ étant l'indice de réfraction de l'enveloppe de la fibre optique et $n_c$ l'indice de réfraction du noyau de fibre respectivement.

4. Dispositif selon l'une des revendications précédentes, caractérisé en ce que ladite ou lesdites fibres optiques sont disposées de manière à former un réseau constitué de lignes de trame et de lignes de chaîne, les lignes de chaîne (j) étant superposées aux lignes de trame (i) ou réciproquement.

5. Dispositif selon l'une des revendications 1 à 4 précédentes, caractérisé en ce que la ou lesdites fibres sont tricotées ou tissées.

6. Dispositif selon l'une des revendications 4 et 5, caractérisé en ce que chaque ligne de trame (i) est superposée à chaque ligne de chaîne (j) et réciproquement à chaque maille ou pas du réseau.

7. Dispositif selon l'une des revendications précédentes, caractérisé en ce que les moyens émetteurs de lumière sont constitués par une ou plusieurs diodes électroluminescentes, lesdites moyens récepteurs de lumière étant constitués par une ou des photodiodes (40) munies d'un dispositif de détection (41).

8. Diospositif selon la revendication 7, caractérisé en ce que le dispositif de détection (41) comporte, connectés en cascade, un filtre passe-bas (410) un convertisseur analogique numérique (412) et un afficheur (413).

9. Dispositif selon la revendication 8, caractérisé en ce que ledit dispositif de détection (41) comporte en outre un dispositif de tarage ou réglage du zéro comprenant:

— un amplificateur différentiel (411) inséré entre le filtre passe-bas (410) et le convertisseur analogique numérique (412) et dont l'entrée positive est connectée à la sortie du filtre passe-bas (410), l'entrée négative de ce même amplificateur différentiel étant reliée à un potentiomètre (417) de réglage du zéro,

— une fibre neutre (N) recevant en illumination d'entrée une fraction de l'illumination engendrée par la ou les diodes électroluminescentes du réseau et délivrant à partir d'un récepteur de lumière propre (415) un signal de calage du zéro (CZ) à l'entrée négative de l'amplificateur différentiel.

10. Dispositif selon l'une des revendications 1 à 7 précédentes, caractérisé en ce que dans le but d'effectuer un relevé des efforts relatifs appliqués en une pluralité de points d'une aire d'essai ledit dispositif comporte:

— un réseau constitué d'une pluralité de m lignes de chaînes dans une première direction et de n lignes de trames dans une deuxième direction, chaque ligne de chaîne ou ligne de trame étant constituée par une fibre optique indépendante munie de ses moyens émetteurs de lumière et de ses moyens récepteurs et détecteurs,

— des moyens de mémorisation dynamique des valeurs d'effort relatif Fi, Rj délivrées par le détecteur associé à chaque fibre optique d'ordre i, j, dans la première respectivement deuxième direction,

— des moyens de lecture/écriture des moyens de mémorisation et des moyens de calcul de l'effort relatif appliqué en chaque point du réseau de coordonnées i, j de la première, respectivement deuxième direction du réseau selon la relation:

$$P_{ij} = \frac{\alpha_i R_j + \beta_j F_i}{2}$$

$$\text{où} \quad \alpha_i = \frac{F_i}{\sum\limits_{1}^{m} R_j} \quad \text{et où} \quad \beta_j = \frac{R_j}{\sum\limits_{1}^{n} F_i}$$

11. Procédé de relevé des efforts appliqués en une pluralité de points d'une aire d'essai au moyen d'un dispositif selon la revendication 10 précédente, caractérisé en ce qu'il consiste:

a) à disposer le réseau (2) du dispositif sur l'aire d'essai,

b) à inscrire en mémoire pour chaque point de coordonnées i, j un état zéro en l'absence de contrainte d'essai appliquée sur l'aire d'essai et le réseau (2),

c) à appliquer la contrainte d'essai sur l'aire et le réseau et à mémoriser les valeurs d'effort relatif Fi, Rj délivrées par le détecteur associé à chaque fibre optique d'ordre i, j dans la première respectivement deuxième direction,

d) à déterminer l'effort relatif Pij appliqué en chaque point de coordonnées i, j intersection des fibres d'ordre i et d'ordre j de la première respectivement deuxième direction du réseau selon la relation

$$P_{ij} = \frac{\alpha_i R_j + \beta_j F_i}{2}$$

$$\text{où} \quad \alpha_i = \frac{F_i}{\sum\limits_{1}^{m} R_j} \quad \text{et où} \quad \beta_j = \frac{R_j}{\sum\limits_{1}^{n} F_i}$$

12. Procédé selon la revendication 11, caractérisé en ce que, préalablement à la phase consistant à déterminer l'effort relatif appliqué en chaque point de coordonnées i, j du réseau, les valeurs d'effort relatif Fi, Rj sont normées par rapport à la plus grande valeur d'effort relatif délivrée par le ou les détecteurs.

13. Procédé selon l'une des revendications 11 ou 12 précédentes, caractérisé en ce que dans le but de déterminer l'effort absolu ei, j appliqué en chaque point de coordonnées i, j intersection des fibres optiques d'ordre i, j du réseau, ledit procédé consiste:

a) à disposer ledit réseau de l'appareil sur une aire d'appui supérieure à l'aire d'essai sur laquelle les contraintes sont appliquées, ladite aire d'essai étant ainsi définie pour tout point du réseau de coordonnées u, v telles que $1 < u < n$; $1 < v < m$,

b) à inscrire en mémoire pour chaque point i, j du réseau, en l'absence de contrainte d'essai, un état zéro définissant l'état initial du système,

c) à appliquer la contrainte d'essai sur le réseau, au niveau de l'aire d'essai, et à mémoriser les valeurs d'effort relatif Fi, Rj délivrées par le détecteur associé à chaque fibre optique d'ordre i, j dans la première respectivement deuxième direction,

d) la contrainte d'essai étant maintenue, à appliquer en au moins un point de coordonnées $i_0$, $j_0$ du réseau telles que $i_0 \notin u$ et $j_0 \in v$ ou $i_0 \in u$ et $j_0 \notin v$, c'est-à-dire en un point du réseau extérieur à l'aire d'essai, un effort étalon déterminé $f_{i_0}, j_0$ et à mémoriser les nouvelles valeurs d'effort relatif $F_{i_0}, R_{j_0}$ délivrées par le détecteur associé à chaque fibre optique d'ordre $i_0$ respectivement $j_0$ dans la première respectivement deuxième direction,

e) à déterminer à partir des nouvelles valeurs d'effort relatif $F_{i_0}, R_{j_0}$ et de la valeur de l'effort étalon $f_{i_0}, j_0$ les différentes valeurs d'effort absolu ei, j de l'ensemble du réseau et de l'aire d'essai par combinaison linéaire de ces valeurs.

14. Appareil de pesée comprenant un dispositif optique de détection d'effort selon l'une des revendications 1 à 9 précédentes, caractérisé en ce qu'il comporte un réseau de fibres optiques constitué en un tapis (51) et un boîtier (52) muni d'une fenêtre d'affichage (520) et d'un bouton de tarage (521).

**Patentansprüche**

1. Optischer Kraftsensor, gekennzeichnet durch:

— mindestens eine optische Faser (1), welche so angeordnet ist, dass sie ein Netz (2) bildet,

— an jeweils einem Ende, Eingangsende genannt, der Faser bzw. der Fasern angeordnete Lichtsendeeinrichtungen (E) und an dem jeweils anderen Ende, Ausgangsende genannt, der Faser bzw. der Fasern angeordnete Lichtempfangseinrichtungen (R), wobei die Empfangseinrichtungen (R) in der Lage sind, eine Information bezüglich der durch die Faser bzw. die Fasern des Netzes übertragenen Lichtintensität und ein Mass entsprechend der ausgeübten Kraft zu liefern.

2. Kraftsensor nach Anspruch 1, dadurch gekennzeichnet, dass die Faser bzw. die Fasern derart angeordnet sind, dass sie ein regelmässiges vermaschtes Netz bildet bzw. bilden, wobei jede Masche des Netzes durch zwei aufeinanderfolgende Schusslinien (i) und durch zwei aufeinanderfolgende Kettenlinien (j) begrenzt wird, welche jeweils durch die entsprechend einer vorgegebenen Teilung beabstandete Faser bzw. beabstandeten Fasern gebildet werden.

3. Kraftsensor nach einem der Ansprüche 1 oder 2, dadurch gekennzeichnet, dass der Teilungsabstand der Kettenlinien und der Schusslinien gleich

$$k \times \frac{\lambda}{2}$$

ist, wobei k eine ganze Zahl $\geq$ 1 ist und wobei $\lambda$ die kritische Periode der mechanischen Störung darstellt, welche in der Lage ist, die benachbarten Ausbreitungswellengruppen zu koppeln, also $\lambda = 2\pi a/(2\Delta)^{1/2}$, wobei a der Radius des Faserkerns und $2\Delta = (1 - n_o^2/n_c^2)$ ist, mit $n_o$ als Brechungsindex der Umhüllung der optischen Faser und mit $n_c$ als Brechungsindex des Faserkerns.

4. Kraftsensor nach einm der vorangehenden Ansprüche, dadurch gekennzeichnet, dass die optische Faser bzw. Fasern derart angeordnet ist bzw. sind, dass ein Netz geformt wird, welches aus Schusslinien und Kettenlinien besteht, wobei die Kettenlinien (j) den Schusslinien (i) überlagert sind oder umgekehrt.

5. Kraftsensor nach einem der Ansprüche 1 bis 4, dadurch gekennzeichnet, dass die Faser bzw. die Fasern gewirkt oder gewebt ist bzw. sind.

6. Kraftsensor nach einem der Ansprüche 4 und 5, dadurch gekennzeichnet, dass jede Schusslinie (i) jeder Kettenlinie (j) und umgekehrt bei jeder Masche oder jedem Teilungsabstand des Netzes überlagert ist.

7. Kraftsensor nach einem der vorangehenden Ansprüche, dadurch gekennzeichnet, dass die Lichtsendeeinrichtungen durch eine oder mehrere Elektrolumineszenzdioden gebildet sind, wobei die Lichtempfangseinrichtungen durch eine oder mehrere Photodioden (40) gebildet sind, welche mit einer Detektoreinrichtung (41) versehen sind.

8. Kraftsensor nach Anspruch 7, dadurch gekennzeichnet, dass die Detektoreinrichtung (41) in Stufenschaltung ein Tiefpassfilter (410), einen Analog-Digital-Wandler (412) und eine Anzeigeeinrichtung (413) aufweist.

9. Kraftsensor nach Anspruch 8, dadurch gekennzeichnet, dass die Detektoreinrichtung (41) ausserdem eine Nullabgleich- bzw. -Einstelleinrichtung enthält, welche aufweist:

— einen Differentialverstärker (411), welcher zwischen dem Tiefpassfilter (410) und dem Analog-Digital-Wandler (412) eingeschaltet ist und dessen positiver Eingang mit dem Ausgang des Tiefpassfilters (410) verbunden ist, wobei der negative Eingang dieses Differentialverstärkers mit einem Nullabgleichpotentiometer (417) verbunden ist,

— eine neutrale Faser (N), welche als Eingangslicht einen Bruchteil desjenigen Lichtes empfängt, welches durch die Elektrolumineszenzdiode bzw. Elektrolumineszenzdioden des Netzes erzeugt wird, und welche über einen geeigneten Lichtempfänger (415) ein Nullabgleichsignal (CZ) an den negativen Eingang des Differentialverstärkers liefert.

10. Kraftsensor nach einem der Ansprüche 1 bis 7, dadurch gekennzeichnet, dass zum Zweck der Feststellung von Relativkräften, die auf eine Mehrzahl von Punkten einer Prüffläche ausgeübt werden, dieser Sensor aufweist:

— ein Netz, welches aus einer Mehrzahl von m Kettenlinien in einer ersten Richtung und von n Schusslinien in einer zweiten Richtung gebildet ist, wobei jede Kettenlinie oder Schusslinie von einer optischen Faser gebildet wird, welche unabhängig mit ihrer Lichtsendeeinrichtung und ihrer Empfangs- und Detektoreinrichtung versehen ist,

— dynamische Speichereinrichtungen für die Werte von Relativkräften Fi, Rj, welche durch den jeweils mit einer jeden optischen Faser der Ordnung i und j in der ersten bzw. der zweiten Richtung zugeordneten Detektor geliefert werden,

— Einrichtungen zum Lesen/Schreiben der Speichereinrichtungen und Einrichtungen zur Berechnung der Relativkraft, welche in jedem Punkt des Netzes mit den Koordinaten i und j in der ersten bzw. der zweiten Richtung des Netzes anliegt, nach der Beziehung:

$$P_{ij} = \frac{\alpha_i R_j + \beta_j F_i}{2}$$

$$\text{wobei } \alpha_i = \frac{F_i}{\sum\limits_{1}^{m} R_j} \quad \text{und wobei } \beta_j = \frac{R_j}{\sum\limits_{1}^{n} F_i}$$

11. Verfahren zum Messen von Kräften, die an einer Mehrzahl von Punkten einer Prüffläche anliegen, mittels eines Sensors nach Anspruch 10, dadurch gekennzeichnet, dass es die folgenden Schritte aufweist:

a) Anordnung des Sensornetzes (2) auf der Prüffläche,

b) Einschreiben eines Nullzustandes in den Speicher für jeden Koordinatenpunkt i und j bei Abwesenheit eines auf die Prüffläche und das Netz (2) ausgeübten Prüfdrucks,

c) Ausübung des Prüfdruckes auf die Fläche und Speicherung der Relativkraftwerte Fi, Rj, welche durch den Detektor geliefert werden, welcher mit einer jeden optischen Faser der Ordnung i, j in der ersten bzw. der zweiten Richtung verbunden ist,

d) Bestimmung der Relativkraft Pij, welche an jedem Koordinatenschnittpunkt i, j der Fasern der Ordnung i und der Ordnung j in der ersten bzw. der zweiten Richtung des Netzes ausgeübt wird, nach der Beziehung

$$P_{ij} = \frac{\alpha_i R_j + \beta_j F_i}{2}$$

$$\text{wobei} \quad \alpha_i = \frac{F_i}{\sum\limits_{1}^{m} R_j} \quad \text{und wobei} \quad \beta_j = \frac{R_j}{\sum\limits_{1}^{n} F_i}$$

12. Verfahren nach Anspruch 11, dadurch gekennzeichnet, dass vorangehend zur Phase, welche aus der Bestimmung der in jedem Koordinatenpunkt i, j des Netzes anliegenden Relativkraft besteht, die Relativkraftwerte $F_i$, $R_j$ bezüglich des grössten von dem Detektor bzw. den Detektoren gelieferten Relativkraftwert normiert werden.

13. Verfahren nach einem der Ansprüche 11 oder 12, dadurch gekennzeichnet, dass zum Zweck der Bestimmung der Absolutkraft $e_i$, j, welche in jedem Koordinatenschnittpunkt i, j der optischen Fasern der Ordnung i bzw. j des Netzes anliegt, dieses Verfahren folgende Schritte aufweist:

a) Anordnung des Netzes der Vorrichtung auf einer Auflagefläche, welche über der Prüffläche liegt, auf welche die Drücke ausgeübt werden, wobei die Prüffläche für jeden Punkt des Koordinatennetzes uv so definiert ist, dass $1 < u < n$; $1 < v < m$,

b) Einschreiben eines Nullzustandes in einen Speicher für jeden Punkt i, j des Netzes bei Abwesenheit des Prüfdruckes, wobei der Nullzustand den Anfangszustand des Systems definiert,

c) Anwendung des Prüfdruckes auf das Netz in Höhe der Prüffläche und Speichern der Relativkraftwerte $F_i$, $R_j$, welche von dem jeweils mit einer jeden optischen Faser der Ordnung i, j in der ersten bzw. der zweiten Richtung verbundenen Detektor geliefert werden,

d) bei Beibehaltung des Prüfdruckes Anlegen einer vorgegebenen Eichkraft $F_{i0}$, $j_0$ an mindestens einem Koordinatenpunkt $i_0$, $j_0$ des Netzes derart, dass $i_0 ∉ u$ und $j_0 ε v$ oder $i_0 u$ und $∉ v$, d.h. an einem Punkt des Netzes ausserhalb der Prüffläche, und Speicherung der neuen Relativkraftwerte $F_{i0}$, $R_{j0}$, welche durch den mit einer jeden optischen Faser der Ordnung $i_0$ bzw. $j_0$ in der ersten bzw. der zweiten Richtung verbundenen Detektor geliefert werden,

e) ausgehend von den neuen Relativkraftwerten $F_{i0}$, $R_{j0}$ und dem Eichkraftwert $f_{i0}$, $j_0$ Bestimmung der absoluten Differenzkraftwerte $e_i$, j der Netzanordnung und der Prüffläche durch lineare Kombination dieser Werte.

14. Waage mit einem optischen Kraftsensor nach einem der Ansprüche 1 bis 9, dadurch gekennzeichnet, dass sie ein Netz von optischen Fasern aufweist, welches aus einer Matte (51) und einem Gehäuse (52) besteht, welches mit einem Befestigungsfenster (520) und mit einem Einstellknopf (522) versehen ist.

**Claims**

1. An optical device for strain detection, which device comprises:

— at least one optical fiber (1) disposed in such a manner as to form a network (2),

— means for emitting light (E) which are disposed at one end, referred to as the entrance end, of the fiber or fibers and means for receiving light (R) which are disposed at the other end, referred to as the exit end, of the fiber or fibers, the said receiving means (R) being capable of supplying information relating to the luminous intensity transmitted by the fiber or fibers of the network and a corresponding measurement of the strain.

2. The device as claimed in claim 1, wherein the fiber or the said fibers are disposed in such a manner as to form a regular meshed network, each mesh of the network being delimited by two weft lines (i) and two warp lines (j) which are successive and which are respectively constituted by the fiber or fibers spaced according to a specified pitch.

3. The device as claimed in one of claims 1 or 2, wherein the spacing pitch of the warp and weft lines is equal to $k × λ/2$ where k is an integer $≧ 1$ and where λ represents the critical period of the mechanical perturbation capable of coupling the groups of adjacent propagation modes, $λ = 2 π a/(2 Δ)^{1/2}$, where:

a is the radius of the core of the fiber,

$2 Δ = (1 - n_0^2/n_c^2)$, $n_0$ being the refractive index of the sheath of the optical fiber and $n_c$ the refractive index of the core of the fibre respectively.

4. The device as claimed in one of the preceding claims, wherein the said optical fiber or optical fibers are disposed in such a manner as to form a network constituted by weft lines and by warp lines, the warp lines (j) being superposed on the weft lines (i) or vice versa.

5. The device as claimed in one of the preceding claims 1 to 4, wherein the said fiber or fibers are knitted or woven.

6. The device as claimed in one of claims 4 and 5, wherein each weft line (i) is superposed on each warp line (j) and vice versa at each mesh or pitch of the network.

7. The device as claimed in one of the preceding claims, wherein the means for emitting light comprise one or more light-emitting diodes, the said means for receiving light comprising one or more photodiodes (40) equipped with a detecting device (41).

8. The device as claimed in claim 7 wherein the detecting device (41) comprises, connected in cascade, a low pass filter (410), an analog-digital converter (412) and a display device (413).

9. The device as claimed in claim 8 wherein the said detecting device (41) further includes a calibration or zero-setting device, comprising:

— a differential amplifier (411) inserted between the low pass filter (410) and the analog-digital converter (412) and the positive input of which is connected to the output of the low pass filter (410), the negative input of the said differential amplifier being connected to a potentiometer (417) for setting the zero,

— a neutral fiber (N) receiving by way of entrance illumination a fraction of the illumination generated by the light-emitting diode or the light-emitting diodes of the network and supplying from a specifically associated light receiver (415) a signal for regulation of the zero (CZ) to the negative input of the differential amplifier.

10. The device as claimed in one of the preceding claims 1 to 7, wherein, for the purpose of effecting a statement of the relative strains applied at a plurality of points of a test area, the said device comprises:

— a network comprising a plurality of m warp lines in a first direction and n weft lines in a second direction, each warp line or weft line being constituted by an independent optical fiber provided with its means for emitting light and its receiving means and detectors,

— means for dynamic memorization of the values of relative strain Fi, Rj which are supplied by the detector associated with each optical fiber of order i, j, in the first and second direction respectively,

— read/write means, memorization means and means for calculating the relative strain applied at each point of the network of coordinates i, j of the first and second direction respectively of the network according to the equation:

$$P_{ij} = \frac{\alpha_i R_j + \beta_j F_i}{2}$$

where $\alpha_i = \dfrac{F_i}{\sum\limits_1^m R_j}$ and where $\beta_j = \dfrac{R_j}{\sum\limits_1^n F_i}$

11. A method for stating the strains applied at a plurality of points of a test area by means of a device as claimed in the preceding claim 10, which method comprises the steps of:

a) disposing the network (2) of the device on the test area,

b) recording in memory for each point of coordinates i, j a zero condition in the absence of a test load applied to the test area and the network (2),

c) applying the test load to the area and the network and memorizing the values of relative strain Fi, Rj supplied by the detector associated with each optical fiber of order i, j in the first and second direction respectively,

d) determining the relative strain Pij applied at each point of coordinates i, j of intersection of the fibers of order i and of order j of the first and second direction respectively of the network in accordance with the equation:

$$P_{ij} = \frac{\alpha_i R_j + \beta_j F_i}{2}$$

where $\alpha_i = \dfrac{F_i}{\sum\limits_1^m R_j}$ and where $\beta_j = \dfrac{R_j}{\sum\limits_1^n F_i}$

12. The method as claimed in claim 11, wherein, prior to the phase consisting of determining the relative strain applied at each point of coordinates i, j of the network, the values of relative strain Fi, Rj are standardized in relation to the greatest value of relative strain which is supplied by the detector or detectors.

13. The method as claimed in one of the preceding claims 11 or 12, wherein, for the purpose of determining the absolute strain ei, j applied at each point of coordinates i, j of intersection of the optical fibers of order i, j of the network, the said method comprises the steps of:

a) disposing the said network of the apparatus on a support area greater than the test area to which the loads are applied, the said test area being thus defined for any point of the network of coordinates u, v such that $1 < u < n$; $1 < v < m$,

b) recording in memory fore each point i, j of the network, in the absence of a test load, a zero condition defining the initial condition of the system,

c) applying the test load to the network, at the location of the test area, and memorizing the values of relative strain Fi, Rj which are supplied by the detector associated with each optical fiber of order i, j in the first and second direction respectively,

d) while the test load is maintained, applying at at least one point of coordinates $i_0$, $j_0$ of the network which are such that $i_0 \notin u$ and $j_0 \varepsilon v$ or $i_0 \varepsilon u$ and $j_0 \notin v$, that is to say at a point of the network exterior to the test area, a determined standard strain $fi_0$, $j_0$ and memorizing the new values of relative strain $Fi_0$, $Rj_0$ which are supplied by the detector associated with each optical fiber of order $i_0$ and $j_0$ respectively in the first and second direction respectively,

e) determining from the new values of realtive strain $Fi_0$, $Rj_0$ and from the value of the standard strain $fi_0$, $j_0$ the various values of absolute strain ei, j of the assembly of the network and of the test area by linear combination of these values.

14. A weighing apparatus comprising an optical device for strain detection as claimed in one of the preceding claims 1 to 9, which apparatus comprises a network of optical fibers which is constituted in the form of a mat (51) and a housing (52) equipped with a display window (520) and with a calibration button (521).

FIG_1b

FIG_1a

FIG_2a

FIG_2b

FIG_2c

FIG. 3a

FIG. 3b

FIG_4

FIG_5

FIG_6a

CONTRAINTE D'ESSAI

FIG_6b